## Europäisches Patentamt

## European Patent Office

## Office européen des brevets

(19)

(11) Publication number: **0 049 031**
**B1**

(12)                    **EUROPEAN PATENT SPECIFICATION**

(45) Date of publication of the patent specification:
07.03.84

(51) Int. Cl.³: **F 16 C 11/06**

(21) Application number: 81303265.3

(22) Date of filing: 16.07.81

(54) Ball joints and liners therefor.

(30) Priority: 18.07.80 GB 8023564

(43) Date of publication of application:
07.04.82 Bulletin 82/14

(45) Publication of the grant of the patent:
07.03.84 Bulletin 84/10

(84) Designated Contracting States:
DE FR GB NL SE

(56) References cited:
EP - A - 0 020 214
DE - A - 2 201 874
DE - U - 7 301 171
GB - A - 1 187 187
GB - A - 1 198 365
US - A - 3 367 728

(73) Proprietor: FORD MOTOR COMPANY LIMITED, Eagle Way, Brentwood Essex CM13 3BW (GB)
(84) Designated Contracting States: GB NL SE

(73) Proprietor: FORD-WERKE AKTIENGESELLSCHAFT, Ottoplatz 2 Postfach 21 03 69, D-5000 Köln 21 (DE)
(84) Designated Contracting States: DE

(73) Proprietor: FORD FRANCE SOCIETE ANONYME, 344 Avenue Napoléon Bonaparte B.P. 307, F-92506 Ruell Malmaison Cedex (FR)
(84) Designated Contracting States: FR

(72) Inventor: McCabe, Graham, 20 Chipping Hill, Witham Essex (GB)

(74) Representative: Drakeford, Robert William et al, Ford Motor Company Limited 15/448, Research & Engineering Centre Laindon, Basildon Essex SS15 6EE (GB)

## Ball joints and liners therefor

This invention relates to liners for ball joints, and ball joints including such liners.

A conventional ball joint, such as used to mount a gear selector lever on a gearbox, comprises a housing having a recess therein, which is usually cylindrical, a ball element pivotably received in the recess, and a bearing liner between the ball element and the recess.

One known kind of liner as, for example disclosed in British patent specification No: 1,187,187, comprises an annulus of resiliently deformable plastics material having an inner spherical bearing surface. In order to allow the liner to be pushed on to the ball element, at least one end portion of the annulus has a plurality of axially extending cicumferentially spaced tongues. These tongues spread radially outwardly to dilate the end of the annulus as the ball element is inserted into the annulus. In a similar liner, disclosed in DE-U-7301171, the tongues have radially outwardly extending projections which engage in a cavity in the recess in the housing when the ball element is inserted into the liner. In both cases the liner and ball element must be inserted into the housing from opposite sides, and the ball element can be withdrawn from the liner using the same force as applied on assembly.

In order to prevent unintentional removal of the ball element from the liner, a retainer, such as a spring circlip or a nut must be secured to the housing in contact with the liner. In the case of a gear selecter lever, if a nut is used as a retainer, it is normally positioned above the ball element, where it limits the range of movement of the lever. If a circlip is used, it is usually necessary to insert shims into the housing to compensate for variations in size of the ball element and the recess due to manufacturing tolerances. Assembly of the joint is therefore relatively complicated.

According to the present invention, there is provided a liner for a ball joint comprising an annulus of resiliently deformable plastics material having an inner spherical bearing surface, at least one end portion of the annulus having a plurality of axially extending circumferentially spaced tongues which can be deflected radially to dilate the end of the annulus, at least some of the tongues having inner surfaces which lie in the spherical bearing surface, and at least one of the tongues having a radially outwardly extending projection for retaining the liner in a bearing mounting characterised in that the inner surface of the or each tongue having a radially outwardly extending projection is spaced radially outwardly from the spherical bearing surface.

In use the liner is mounted on the ball element of a ball joint with its spherical surface in sliding contact with a spherical surface of the ball element, the tongues undergoing radial deflection to dilate the end of the annulus as the ball element is inserted therein. The assembled ball element and annulus can then be mounted in a housing provided with a recess for receiving the ball element and liner, the liner being retained in the recess by engagement of the or each projection with a radial cavity, for example a circumferential groove, in the recess. Since the or each tongue of the annulus carrying the radial projections has an inner surface spaced radially from the spherical bearing surface of the annulus, and therefore of the ball element, the tongues can be deflected radially inwardly thereby allowing the radial projections to be inserted into the recess in the housing.

In order to facilitate insertion of the annulus into the recess, the or each projection preferably has a radially outer surface which is inclined at an acute angle to the external surface of the liner in a direction away from the axis of the annulus and towards the central radial plane thereof. As a result, the engagement of the projection with the mouth of the recess exerts a radially inward force on the tongues. In addition, the projection preferably has another part of its surface inclined in the opposite direction so that the projections are wedge-shaped in axial cross section. This ensures positive engagement of the projections in the cavity of the recess even when the relative radial and axial positions of the inner surface and cavity vary within manufacturing tolerances.

Preferably the other end portion of the annulus also has a plurality of axially extending circumferentially spaced tongues the inner surfaces of which lie in the spherical bearing surface of the annulus. This construction permits the ball element to be introduced into the annulus from either end. With such a construction, the tongues are preferably so disposed relative to each other that dilation of one end of the annulus produces a contraction in the other end of the annulus. For example, the tongues may be formed by slots in the annulus extending axially from the ends of the annulus, the slots at each end preferably being circumferentially interleaved to avoid weakening the annulus at its central radial plane. With such a construction, insertion of the one end of the annulus into the recess is facilitated by dilating the other end of the annulus by partially inserting the ball element. The liner can also preferably expand radially, thus accommodating variations in size of the ball element within manufacturing tolerances.

In order that the invention may be better understood, a preferred embodiment thereof will now be described, by way of example only, with reference to the accompanying drawings, in which:

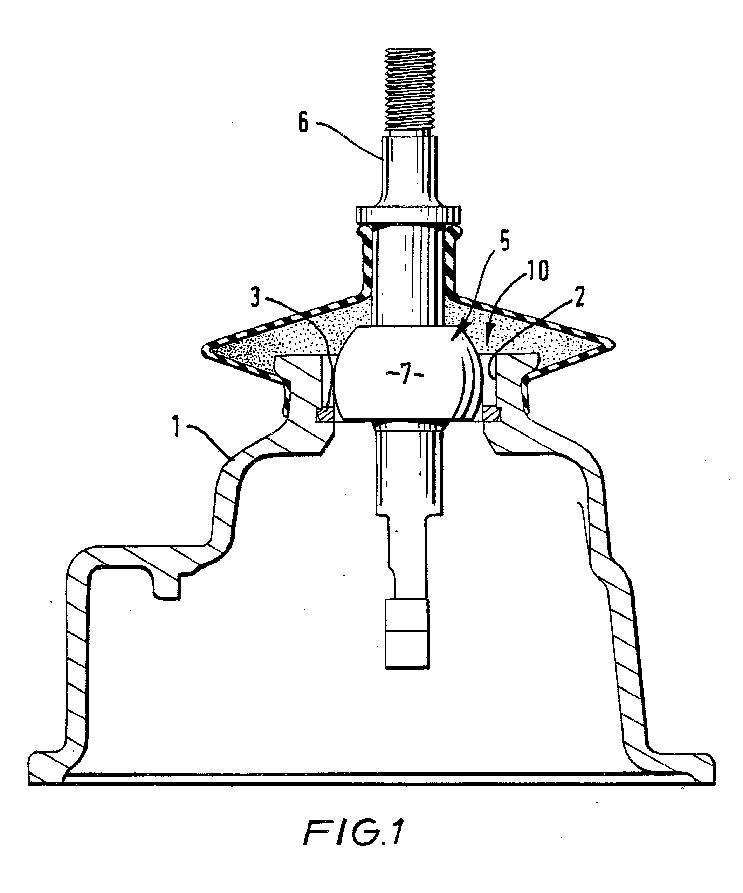

Figure 1 is a cross-section through a ball joint incorporating a liner in accordance with the invention;

Figure 2 is an end view on an enlarged scale of a liner incorporated in the ball joint of Figure 1;

Figure 3 is an axial cross-section of the liner of Figure 2;

Figure 4 is a cross-section on an enlarged scale through part of the ball joint of Figure 1 during a first stage of assembly; and

Figure 5 is a similar cross-section to Figure 4 showing the ball joint during a later stage of assembly.

Referring to the drawings, a gear selector lever assembly for a gearbox comprises a housing 1 having a cylindrical recess 2 the internal surface of which includes a radial cavity in the form of a circumferential groove 3.

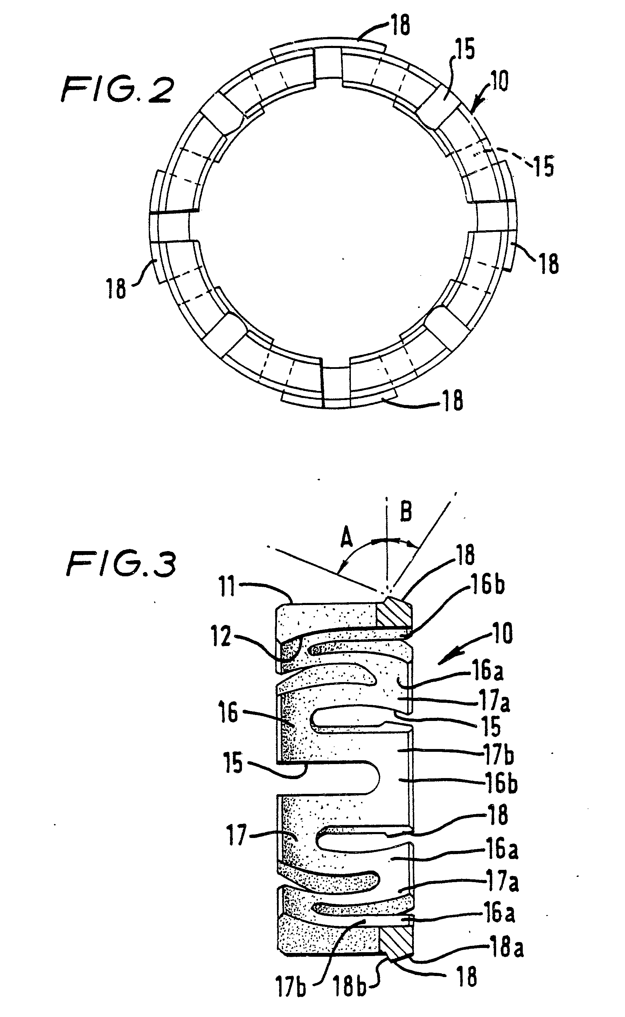

A ball element 5 of sintered metal press fitted on to a selector lever 6 is received in the recess 2. The ball element 5 has a spherical surface 7 of smaller diameter than the recess 5, and is retained in the recess by a liner 10, illustrated in detail in Figures 2 and 3.

The liner 10 comprises a one-piece moulding of resiliently deformable plastics material, such as a self-lubricating acetal copolymer of the kind conventionally used as a bearing liner material. The liner 10 is an annulus having a generally cylindrical external surface 11 which is a sliding fit with the recess 2. The internal surface 12 of the liner defines a spherical bearing surface of complementary diameter to that of the spherical surface 7 of the ball element 5 so that the spherical surface 7 of the ball element 5 can make a sliding contact therewith.

Each end of the liner 10 is provided with eight axial slots 15. The slots 15 at each end extend beyond the central radial plane of the liner 10 and are interleaved circumferentially with the slots at the opposite end so that the annulus has a sinuous shape which is both flexible and strong.

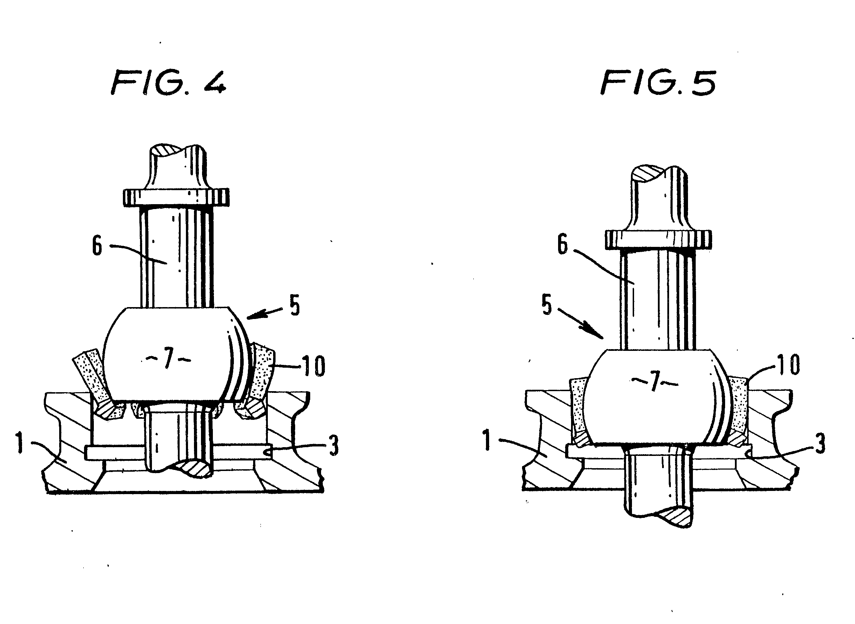

Adjacent pairs of slots divide the end portions of the annulus into eight circumferentially spaced tongues 16, 16a, 16b. The tongues at either end of the liner 10 can be deflected radially outwardly to dilate the end of the liner 10, a dilation at one end being accompanied by a contraction at the other end of the annulus. This allows the ball element 5 to be inserted into either end of the annulus as illustrated in Figure 4.

All the tongues 16 at one end of the annulus have an inner surface 17 which lies in the spherical bearing surface 12 of the liner 10. At the other end of the annulus however, only four of the tongues 16a have inner surfaces 17a lying in the bearing surface of the liner. The other four tongues, 16b have inner surfaces 17b which are spaced radially from the spherical bearing surface 12 of the annulus 10, and which lie in a cylindrical surface parallel to the external surface 11 of the annulus 10 and tangential to the bearing surface 12 at the central radial plane of the liner 10. These four tongues 16b are also provided with radially outwardly extending projections 18. Each projection is generally wedge-shaped in axial cross-section having a leading radially outer conical surface 18a which is inclined outwardly at an angle A to the radial plane away from the central axis of the liner and towards the central plane thereof, and a trailing outer conical surface 18b which is inclined in the opposite direction at a smaller angle, B, to the radial plane. The bases of these projections are axially wider than the groove 3 so that the extremities of the projections engage in the circumferential groove 3 and retaining the liner 10 and the ball element 5 in the recess 2.

In order to assemble the joint, the ball element 5 is partially inserted into the end of the annulus opposite the projections 18, thus dilating the end into which it is inserted and contracting the opposite end. The contracted end of the annulus can then easily be introduced into the mouth of the recess 3, as illustrated in Figure 4. The wedge shapes of the projections 18 facilitate this movement.

The ball element 5 is then pushed firmly into the liner 10 so that its spherical surface 7 lies in contact with the bearing surface 12 of the liner. This movement causes the dilated end of the liner 10 to return to its normal size, allowing the liner to slide into the recess 3. Since the four tongues 16b carrying the projections 18 have inner surfaces spaced from the spherical bearing surface 12 of the liner 10, the engagement of the projections 18 with the cylindrical internal surface of the recess 2 deflects the tongues 16b radially inwardly, so that the projections 18 are accommodated within the recess 2, as illustrated in Figure 5. Since the slots 15 allow radial expansion of the liner 10, variations in size of the ball element 5 due to manufacturing tolerances can be accommodated.

Further movement of the liner 10 and ball 5 into the recess brings the projections into registry with the groove 3, whereupon the tongues 16b expand radially outwardly to retain the liner in position. Since the projections 18 are wedge shaped, in axial cross-section, with their faces inclined at acute angles in opposite directions to the central radial plane, the projections will engage in the groove 3 regardless of small variations in the relative positions of the groove 3 and liner 10 due to manufacturing tolerances.

No further fixing of the selector lever 6 to the housing 1 is required, so that the movement of the lever 6 relative to the housing 1 is unencumbered by retainers such as nuts. Moreover, the use of a flexible liner 10 with wedge-shaped retaining projections 18 accommodates variations in size of the recess 2 in the housing and of the ball element 5 within manufacturing tolerances, thereby avoiding the need for shims or other spacers. Indeed variations within relatively large tolerances can be accommodated, which allows the components of the assembly to be manufactured by cheaper methods. For example, the ball element 5 may be of sintered metal.

## Claims

1. A liner for a ball joint comprising an annulus (10) of resiliently deformable plastics material having an inner spherical bearing surface (12), at least one end portion of the annulus having a plurality of axially extending circumferentially spaced tongues (16a, 16b) which can be deflected radially to dilate the end of the annulus (10) at least some of the tongues (16a) having inner surfaces (17a) which lie in the spherical bearing surface (12), and at least one of the tongues (16b) having a radially outwardly extending projection (18) for retaining the liner in a bearing mounting (1) characterised in that the inner surface (17b) of the or each tongue (17b) having a radially outwardly extending projection (18) is spaced radially outwardly from the spherical bearing surface (12).

2. A liner according to Claim 1 wherein the projection (18) has part (18a) of its radially outer surface inclined at an acute angle (A) to the external surface of the liner in a direction away from the axis of the annulus and towards the central plane thereof.

3. A liner according to Claim 2 wherein the projection has another part (18b) of its radially outer surface inclined in the opposite direction.

4. A liner according to any one of Claims 1 to 3 wherein the other end portion of the annulus has a plurality of axially extending circumferentially spaced tongues (16) the inner surfaces of which lie in the spherical bearing surface (12).

5. A liner according to Claim 4 wherein the tongues (16, 16a, 16b) on each end portion are so disposed relative to each other that dilation of one end of the annulus produces a contraction in the other end of the annulus.

6. A ball joint comprising a ball element (5) having a spherical external surface (17), a liner (10) according to any one of Claims 1 to 5 mounted thereon with the spherical bearing surface (12) of the annulus in sliding contact with the said surface (7) of the ball element (5), and a housing (1) having an internal surface defining a recess (2) for receiving the ball and liner characterised in that the liner (10) is retained in the recess (2) by the engagement of the or each projection (18) with a radial cavity (3) in the recess.

**Patentansprüche**

1. Verkleidung für ein Kugelgelenk, bestehend aus einem Kreisring (10) aus elastisch deformierbarem Kunststoff mit einer kugelförmigen Innenlagerfläche (12), wobei mindestens ein Endteil des Kreisrings mehrere sich axial erstreckende, über den Umfang auf Abstand verteilte, zur Ausweitung des Endes des Kreisringes (10) radial ablenkbare Zungen (16a, 16b) aufweist, wobei mindestens einige der Zungen (16a) in der kugelförmigen Lagerfläche (12) liegende Innenflächen (17a) besitzen und mindestens eine der Zungen (16b) einen sich radial nach aussen erstreckenden Vorsprung (18) zur Halterung der Verkleidung in einem Lagergehäuse (1) trägt, dadurch gekennzeichnet, dass die Innenfläche (17b) der Zunge bzw. Zungen (16b), die je einen sich radial nach aussen erstreckenden Vorsprung (18) aufweisen, auf Abstand radial auswärts von der kugelförmigen Lagerfläche (12) liegt.

2. Verkleidung nach Anspruch 1, worin ein Teil (18a) der radial äusseren Fläche des Vorsprungs (18) unter einem spitzen Winkel (A) gegen die Aussenfläche der Verkleidung in Richtung von der Kreisringachse hinweg und auf deren Mittelebene hin geneigt ist.

3. Verkleidung nach Anspruch 2, worin ein weiterer Teil (18b) der radial äusseren Fläche des Vorsprungs in der entgegengesetzten Richtung geneigt ist.

4. Verkleidung nach einem der Ansprüche 1 bis 3, worin der andere Endteil des Kreisrings mehrere sich axial erstreckende, über den Umfang auf Abstand verteilte Zungen (16) aufweist, deren Innenflächen in der kugelförmigen Lagerfläche (12) liegen.

5. Verkleidung nach Anspruch 4, worin die Zungen (16, 16a, 16b) auf jedem Endteil so gegeneinander angeordnet sind, dass eine Ausweitung an einem Ende des Kreisrings ein Zusammenziehen an dessen anderem Ende zur Folge hat.

6. Kugelgelenk, bestehend aus einem Kugelelement (5) mit einer kugelförmigen Aussenfläche (17), einer Verkleidung (10) nach einem der Ansprüche 1 bis 5, die darauf in Gleitberührung der kugelförmigen Lagerfläche (12) des Kreisrings mit jener Fläche (7) des Kugelelements (5) gelagert ist, und einem Gehäuse (1) mit einer Innenfläche, die eine Ausnehmung (2) zur Aufnahme der Kugel und Verkleidung begrenzt, dadurch gekennzeichnet, dass die Verkleidung (10) in der Ausnehmung (2) durch Eingriff des bzw. der Vorsprünge (18) in je einem radialen Hohlraum (3) in der Ausnehmung gehalten ist.

**Revendications**

1. Garniture pour un joint à rotule, comprenant une couronne (10) en une matière plastique élastiquement déformable ayant une surface d'appui shérique intérieure (12), au moins une partie en bout de cette couronne comportant plusieurs languettes (16a, 16b) s'étendant axialement, espacées circonférentiellement et pouvant être déviées radialement pour dilater l'extrémité de la couronne (10), au moins certaines des languettes (16a) ayant des surfaces intérieures (17a) situées dans la surface d'appui sphérique (12), tandis qu'au moins une des languettes (16b) comporte une saillie (18) s'étendant radialement vers l'extérieur pour retenir la garniture dans une monture d'appui (1), caractérisée en ce que la surface intérieure (17b) de la ou de chaque languette (17b) comportant une saillie (18) s'étendant radialement vers l'extérieur est espacée radialement vers l'extérieur de la surface d'appui sphérique (12).

2. Garniture suivant la revendication 1, caractérisée en ce qu'une partie (18a) de la surface extérieure radiale de la saillie (18) est inclinée sous un angle aigu (A) par rapport à la surface extérieure de la garniture dans une direction s'écartant de l'axe de la couronne et vers le plan central de celle-ci.

3. Garniture suivant la revendication 2, caractérisée en ce qu'une autre partie (18b) de la surface extérieure radiale de la saillie est inclinée dans la direction opposée.

4. Garniture suivant l'une quelconque des revendications 1 à 3, caractérisée en ce que l'autre partie en bout de la couronne comporte plusieurs languettes (16) s'étendant radialement, espacées circonférentiellement et dont les surfaces intérieures sont situées dans la surface d'appui sphérique (12).

5. Garniture suivant la revendication 4, caractérisée en ce que les languettes (16, 16a, 16b) se trouvant sur chaque partie en bout sont disposées l'une par rapport à l'autre de telle sorte que la dilatation d'une extrémité de la couronne ait pour effet de provoquer une contraction dans l'autre extrémité de la couronne.

6. Joint à rotule comprenant un élément sphérique (5) ayant une surface extérieure sphérique (7), une garniture (10) suivant l'une quelconque des revendications 1 à 5 montée sur cet élément, la surface d'appui sphérique (12) de la couronne entrant en contact par glissement avec cette surface (7) de l'élément sphérique (5), ainsi qu'un logement (1) ayant une surface intérieure définissant un creux (2) pour recevoir l'élément sphérique et la garniture, caractérisé en ce que la garniture (10) est retenue dans le creux (2) par l'engagement de la ou de chaque saillie (18) dans une cavité radiale (3) ménagée dans le creux.

FIG.1

**FIG.2**

**FIG.3**

9

# FIG. 4

# FIG. 5